# EUROPEAN PATENT APPLICATION

(11) **EP 1 889 543 A1**
(43) Date of publication of application: **20.02.2008**
(21) Application number: 06017024.8
(22) Date of filing: 16.08.2006
(51) Int. Cl.: A22C 9/00

(54) **Device and method for massaging food products**

(71) Applicant: CFS Slagelse A/S, 4200 Slagelse (DK)
(72) Inventor: Kofoed, Niels Peter, 4340 Töllöse (DK); Plougheld, Lars, 9210 Aalborg SÖ (DK)
(74) Representative: Wolff, Felix

(57) **Abstract**

Device for the treatment of food material, comprising a vessel and an arrangement for massaging the food material and method for massaging food material by means of ultrasound. Food material in this sense comprises any food material that is treated by massaging, in particular meat, poultry, fish and food products made therefrom.

## Description

The invention relates to a device for the treatment of food material, comprising a vessel and an arrangement for massaging the food material and to a method for massaging food material. Food material in this sense comprises any food material that is treated by massaging, in particular meat, poultry, fish and food products made therefrom.

Single- or twin-shaft mixers and tumblers are known devices. For example, in SU 891 047 a tumbler of polygonal section is filled with lumps of meat and a brine for curing the meat is described. The meat is massaged by slowly rotating the tumbler. Fast rotation of the tumbler leads to undesirable destruction of the food material. It is a drawback of the known device, that the treatment of food material takes a long time, which is economically unfavourable. Further, the construction of the rotating tumbler is very complex.

Accordingly, it is an object of the present invention to provide a device for the treatment of food material which avoids the disadvantages of the prior art.

The above objective is accomplished by a device for the treatment of food material, comprising a vessel and an arrangement for massaging the food material, wherein the arrangement for massaging the food material comprises at least one generator for generating power ultrasound.

Power ultrasound, in the sense of the present invention, is distinguished from ultrasound used for contactless measurement. Sound waves are mechanical vibrations in a solid or fluid. Ultrasound comprises sound waves with a frequency exceeding the human auditory threshold, the lowest ultrasonic frequency is thus taken as 20 kHz. Ultrasound applications can be divided into two broad categories: low- and high-power ultrasound. Low power applications include medical imaging and non-destructive testing. The ultrasound in these applications does not have any significant effect on the subject of the scan. By contrast, power ultrasound does have an effect which is advantageously made use of by the present invention.

The power ultrasound generates quickly changing phases of high- and low pressure in a medium. Whenever ambient pressure is reduced, the boiling point is also lowered. When this happens on a small scale, due to localised pressure reduction, small bubbles of vapour are formed. The low-pressure areas are highly localised and changing all the time, for an ultrasonic standing wave the time between lowest and highest pressure is typically 10 to 25 microseconds. The bubbles collapse violently, which is known as cavitation.

It is an advantage of the present invention, that the power ultrasound massages not only the surface of the food products, but kneads the inside of the food product. For example, tenderising meat lumps by power ultrasound is quicker than massaging in a tumbler, where only the surface of the meat is affected. Also, a brine injected into a meat lump is dispersed faster under the effect of power ultrasound.

In a preferred embodiment, the arrangement for massaging the food material comprises a plurality of generators for generating power ultrasound. The food material inside the vessel is thus more evenly massaged by the power ultrasound, which is in particular advantageous for food production in industrial scale vessels.

Preferably, the generator for generating the power ultrasound is arranged in a wall of the vessel. The vessel is advantageously easy to clean and the electrical contacts of the generators are accessible. The power ultrasound generator preferably comprises a transducer, which converts electric energy to mechanical energy. The transducer comprises, for example, two or four piezoelectric discs which generate a vibration upon impression of a voltage. The vibrations are preferably transferred via a booster to a sonotrode. The booster can be used for amplification, i.e. the amplitude of the ultrasound waves is increased. In a stationary point of the booster which does not vibrate, a flange can be arranged for mounting the generator to the wall of the vessel. Advantageously, only the sonotrode, made of food-safe titanium or stainless steel protrudes into the vessel.

More preferable, the generator for generating the power ultrasound is arranged in a bottom wall and/or in a lower sidewall of the vessel. Advantageously, the power sound generators are in direct contact with the food material. Preferably, the arrangement for massaging the food material further comprises at least one stirrer which is arranged inside the vessel to mix the food product and thus to achieve a more evenly distribution of the power ultrasonic massaging effect. Furthermore preferred, the stirrer is used as a massaging wing. Mechanical massaging using the massaging wing or stirrer is advantageously done in combination with the power ultrasound massaging. Most preferably, a quotient of energy applied to the food product by power ultrasound and energy applied to the food product mechanically by the stirrer is variable, in particular over the process time. The quotient, for example, depends upon the actual product processed and on the actual phase of the process.

Preferably, the vessel contains a liquid. The transmission of the power ultrasound to the food material is advantageously enhanced by the liquid, which is preferably a brine, in particular, if the treatment of the food is aimed at curing the food product.

In a preferred embodiment, the wall of the vessel is sound absorbing, which advantageously avoids noise pollution. In a further preferred embodiment, the wall is cooled. The power ultrasound heats up the food product inside the vessel and a cooling means in the wall of the vessel can be used to keep the temperature constant, inside the vessel.

The generator for generating the power ultrasound is controllable by a controller unit. In particular, the power ultrasound is controlled such, that the amplitude is constant. Thus, the mechanical energy exerted on the food product is constant and the massaging process is reproducible. To keep the amplitude constant, the generator consumes varying electrical power, depending upon, for example, the temperature of the food or filling height in the vessel. The power ultrasound generators are provided with the necessary electrical power by the controller unit.

Another aspect of the present invention is a method for massaging food material, comprising the steps of filling the food material into a vessel and generating a power ultrasound in the vessel. Preferably, a liquid is also filled into the vessel, more preferable a brine. Alternatively or additionally the brine can be injected into the food material, preferably prior to the massage treatment.

In a preferred embodiment, a mechanical power exerted on the food material by the power ultrasound is controlled by a controller unit. By keeping the mechanical power exerted on the food material constant, the massage process is advantageously reproducible. Furthermore preferred, a frequency sweep of the power ultrasound is conducted by the controller unit. By changing the ultrasound frequency, standing waves inside the vessel are avoided and the massaging effect of the power ultrasound is distributed evenly over the volume of the vessel.

These and other characteristics, features and advantages of the inventive device and method will become apparent from the following detailed description, taken in conjunction with the accompanying drawing, which illustrates, by way of example, the principles of the invention. The description is given for the sake of example only, without limiting the scope of the invention.

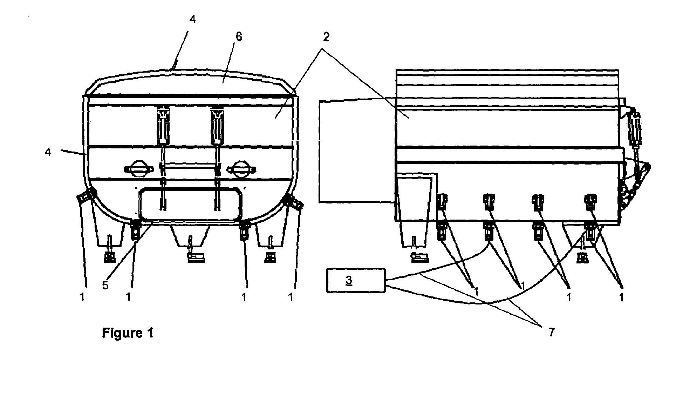

- Figure 1: shows two side elevations of a device according to the present invention.

In Figure 1, two side elevations of a device for the treatment of food material are depicted. The device comprises a vessel 2 with a bottom 5 and an openable top cover 6, which is depicted in the closed position. At the bottom 5 and at the lower part of the side walls of the vessel 2, generators 1 for generating power ultrasound are arranged, preferably such, that a sonotrode of the generators 1 access the internal space of the vessel 2. Outside the vessel 2, the generators 1 are connected via cables 7 to a controller unit 3. For the sake of intelligibility, only two cables 7 are depicted representatively. The walls of the vessel 2 and the top cover 6 comprise a sound insulation 4. Further the vessel walls can be connected to a cooling means.

## Claims

1. Device for the treatment of food material, comprising a vessel (2) and an arrangement for massaging the food material, **characterized in that** the arrangement for massaging the food material comprises at least one generator (1) for generating power ultrasound.

2. Device according to claim 1, **characterized in that** the arrangement for massaging the food material comprises a plurality of generators (1) for generating the power ultrasound.

3. Device according to one of claims 1 or 2, **characterized in that** the generator (1) for generating the power ultrasound is arranged in a wall of the vessel (2), preferably in a bottom wall and/or in a lower sidewall.

4. Device according to one of the preceding claims, **characterized in that** the arrangement for massaging the food material further comprises at least one stirrer.

5. Device according to claim 4, **characterized in that** a quotient of energy applied to the food product by power ultrasound and energy applied to the food product mechanically by the stirrer is variable.

6. Device according to one of the preceding claims, **characterized in that** the vessel (2) contains a liquid, preferably a brine.

7. Device according to one of the preceding claims, **characterized in that** the wall of the vessel is sound absorbing and/or cooled.

8. Device according to one of the preceding claims, **characterized in that** the generator (1) for generating power ultrasound is controllable by a controller unit (3).

9. Method for massaging food material, comprising the steps of filling the food material into a vessel (2) and generating a power ultrasound in the vessel.

10. Method according to claim 9, **characterized in that** a liquid, preferably a brine, is filled into the vessel

11. Method according to one of claims 9 or 10, **characterized in that** the brine is injected into the food material.

12. Method according to one of claims 9 to 11, **characterized in that** an ultrasound power introduced into the food material is controlled by a controller unit (3).

13. Method according to one of claims 9 to 12, **characterized in that** a frequency sweep of the power ultrasound is conducted by the controller unit (3).
